Europäisches Patentamt

European Patent Office

Office européen des brevets

(11) Numéro de publication: **0 170 573**
**A1**

(12) # DEMANDE DE BREVET EUROPEEN

(21) Numéro de dépôt: **85401353.9**

(22) Date de dépôt: **03.07.85**

(51) Int. Cl.⁴: **H 01 M 4/32**

(30) Priorité: **04.07.84 FR 8410633**

(43) Date de publication de la demande:
**05.02.86 Bulletin 86/6**

(84) Etats contractants désignés:
**BE CH DE FR GB IT LI LU NL SE**

(71) Demandeur: **SOCIETE LES PILES WONDER**
**77, rue des Rosiers**
**F-93406 Saint-Ouen(FR)**

(72) Inventeur: **Stiker, Bernard**
**251, rue de Crimée**
**F-75019 Paris(FR)**

(74) Mandataire: **Lecca, Jean et al,**
**CABINET PLASSERAUD 84, rue d'Amsterdam**
**F-75009 Paris(FR)**

(54) **Perfectionnements aux électrodes positives à l'hydroxyde de nickel pour accumulateurs alcalins.**

(57) L'inventiona pour objet un procédé pour fabriquer und électrode positive à l'hydroxyde de nickel pour accumulateur alcalin, caractérisé en ce qu'il comporte, en combinaison, deux phases principales successives, à savoir : une première phase consistant à déposer sur un support un mélange pâteux d'hydroxyde de nickel en poudre qui comporte en outre une proportion relativement réduite d'une poudre conductrice et une très faible quantité d'un liant, puis à sécher et à laminer le mélange pâteux sur le support; et une deuxième phase consistant à proceder à une polarisation cathodique, dans un électrolyte à base d'au moins un sel de nickel, du support ainsi revêtu séché et laminé, puis à laver, sécher et assouplir l'électrode ayant subi la polarisation cathodique.

"PERFECTIONNEMENTS AUX ELECTRODES POSITIVES A L'HYDROXYDE
DE NICKEL POUR ACCUMULATEURS ALCALINS"

La présente invention est relative aux électrodes positives à l'hydroxyde de nickel pour accumulateurs alcalins,
notamment pour accumulateurs nickel/cadmium, nickel/fer,
nickel/zinc, nickel/hydrogène.

Les électrodes positives à hydroxyde de nickel pour de
tels accumulateurs sont généralement minces (avec une
épaisseur de l'ordre de quelques dixièmes de millimètre) et
souples.

La méthode industrielle classique de fabrication de
telles électrodes consiste à mettre en oeuvre un support
poreux en nickel fritté. On remplit les pores d'un tel support au moyen d'au moins un sel de nickel en imprégnant le
support au moyen d'une solution d'un tel sel, puis on transforme ce sel en hydroxyde de nickel par immersion dans une
solution alcaline (de potasse ou de soude, par exemple),
d'où précipitation de l'hydroxyde de nickel Ni(OH)$_2$. On
répète un grand nombre de fois le cycle imprégnation/précipitation alcaline.

Les électrodes positives obtenues par ce procédé, appelées généralement "positives frittées", ont de très bonnes performances tant mécaniques qu'électriques, mais leur
fabrication est coûteuse, d'une part, du fait du prix du
support en nickel fritté et, d'autre part, de la nécessité
de répéter le cycle imprégnation/précipitation pour obtenir
la capacité électrique souhaitée (généralement au moins
quatre cycles). Une telle technique demande en outre un
investissement important qui n'est valorisé que par une
fabrication en grande série de telles électrodes.

On a par ailleurs proposé de réaliser des électrodes
positives à l'hydroxyde de nickel sans mettre en oeuvre de support en nickel fritté et sans cycles répétés imprégnation/précipitation.

On a ainsi proposé de partir d'un collecteur bon marché, tel qu'une tôle perforée, un feutre, des fibres de plastique conducteur, des fibres de carbone ou des fibres organiques, sur lequel on dépose, par empâtage ou par saupoudrage, le produit actif, à savoir l'hydroxyde de nickel Ni(OH)$_2$.

Cet hydroxyde de nickel est apporté sous forme de poudre additionnée à une poudre conductrice avantageusement de nickel ou de graphite; en outre on y adjoint très généralement un liant qui est soit une matière plastique divisée, telle que le polyéthylène et/ou le polytétrafluoréthylène, soit un liquide organique que l'on polymérise sous l'effet de la chaleur ou d'un catalyseur.

Ce mélange pulvérulent (hydroxyde de nickel, poudre conductrice et liant) est soit saupoudré sur le collecteur bon marché précité, soit transformé en pâte qui est appliquée sur le collecteur.

Ensuite on procède à un laminage ou à un compactage, suivi d'un traitement thermique pour faire fondre la matière plastique ou polymériser le liant polymérisable.

Les électrodes obtenues par ce procédé sont nettement moins chères que celles obtenues par le procédé industriel classique décrit en premier lieu, mais elles présentent deux inconvénients majeurs par rapport à ces dernières électrodes, à savoir :

- d'une part, leur capacité volumique est nettement plus faible, à cause de la quantité importante de liant inerte et de poudre conductrice qu'il faut utiliser pour avoir un bon rendement électrochimique de l'hydroxyde de nickel,

- d'autre part, leur cyclabilité est faible, car il y a un délitement relativement rapide de l'électrode, au cours des cycles charge/décharge et en surcharge, par dislocation du matériau composite (hydroxyde de nickel, poudre conductrice, liant) sous l'effet des variations de volume du Ni(OH)$_2$ selon son état de charge et sous l'effet des dégagements d'oxygène en cas de surcharge.

On a proposé, il est vrai, d'améliorer la cyclabilité de ces électrodes soit en utilisant des collecteurs spéciaux, soit en modifiant la nature du liant, soit enfin en accroissant la proportion de liant, ce qui a malheureusement pour effet de réduire la capacité volumique.

La demanderesse a découvert qu'il était possible de fabriquer des électrodes positives à l'hydroxyde de nickel ayant sensiblement les qualités de capacité volumique et de résistance au cours des cycles présentées par les électrodes obtenues par une succession d'immersions et précipitations sur un support poreux en nickel fritté, mais à un prix de revient beaucoup plus faible, en opérant en deux phases principales successives, à savoir :

- une première phase consistant à déposer sur un support un mélange pâteux constitué par au moins 70 % en poids d'hydroxyde de nickel en poudre, par 20 à 25 % en poids d'une poudre conductrice et par une quantité inférieure à 5 % en poids d'un liant, puis à sécher et à laminer le mélange pâteux sur le support; et

- une deuxième phase consistant à procéder à une polarisation cathodique, dans un électrolyte à base d'au moins un sel de nickel, du support ainsi revêtu, séché et laminé, puis à laver, sécher et assouplir l'électrode ayant subi la polarisation cathodique.

De préférence :

- la poudre conductrice est constituée par du nickel carbonyle;
- le liant est constitué par du polyéthylène microfiné;
- la polarisation cathodique est précédée par une phase de mouillage, sans application de courant, dans le même électrolyte que celui de la polarisation cathodique.

L'invention pourra être bien comprise à l'aide du complément de description qui suit et des dessins ci-annexés.

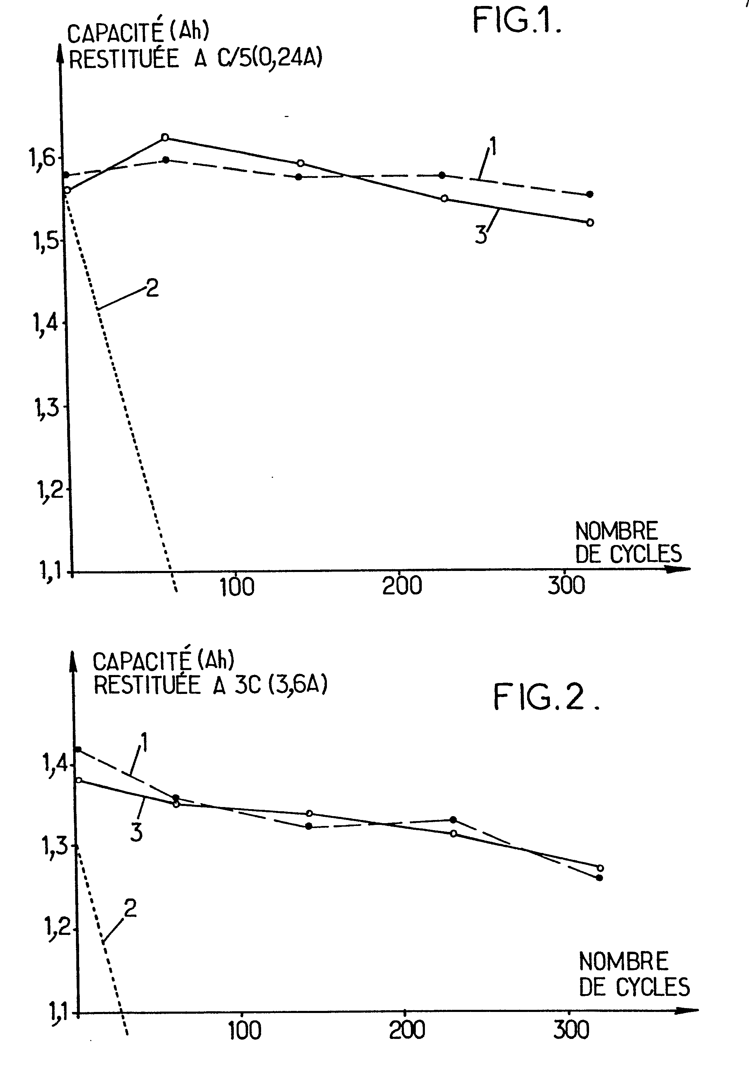

Les figures 1 et 2 des dessins annexés représentent, pour un accumulateur alcalin du type classique de 1,4 Ah nominal KR 23/43 selon le code CEI, les variations de capacité, en ampère-heures, portées en ordonnées en fonction du nombre de cycles charge/décharge portés en abscisses, respectivement à C/5 (restitution en cinq heures avec un débit de 0,24 ampère) pour la figure 1 et à 3C (restitution à un tiers d'heure, c'est-à-dire en 20 minutes, avec un débit de 3,6 ampères) pour la figure 2, et ceci avec une électrode positive à l'hydroxyde de nickel fritté du type industriel classique (courbe 1), pour une électrode positive à l'hydroxyde de nickel obtenue en mettant en œuvre uniquement la première phase du procédé selon l'invention (courbe 2) et enfin pour une électrode positive à hydroxyde de nickel obtenue par le procédé selon l'invention, c'est-à-dire en mettant en oeuvre les deux phases principales de ce procédé.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser des électrodes positives à l'hydroxyde de nickel pour accumulateurs alcalins, on s'y prend comme suit ou d'une manière analogue.

A titre d'exemple, on effectue un mélange des poudres suivantes :

| | |
|---|---|
| poudre de Ni(OH)$_2$ | 72 % |
| nickel carbonyle (poudre conductrice) | 24 % |
| polyéthylène microfiné (liant) | 4 % |

les pourcentages étant donnés en poids.

Dans une variante, le nickel carbonyle peut être remplacé, en totalité ou en partie, par du graphite.

On peut noter que la composition précitée comporte une quantité réduite de matière plastique inférieure à 10 % (par exemple 4 % de polyéthylène microfiné), alors que selon les propositions antérieures de fabrication d'électrodes positives plastiques (sans mise en oeuvre d'un support en nickel fritté avant subi une succession d'imprégnations/précipitations) on met en oeuvre des pourcentages de matière plastique de l'ordre de 10 à 20 % ou davantage; de même dans la composition de l'exemple précité, la quantité de poudre conductrice est inférieure à 30 % (par exemple 24 % de nickel carbonyle), donc bien plus faible que la proportion habituelle de poudre conductrice qui peut atteindre 30 à 50 %.

On met donc en oeuvre, dans la première phase du procédé selon l'invention, un mélange de poudres ayant une bien plus forte capacité faradique volumique que les compositions antérieure pour des électrodes plastiques.

Le mélange pulvérulent précité est mis sous forme de pâte, par exemple en la malaxant avec une solution aqueuse de méthylcellulose à 1 %.

On répartit ensuite la pâte sur un collecteur en fer nickelé perforé, par exemple à l'aide d'une trémie d'empâtage.

On sèche le matériau ainsi empâté et on le lamine pour l'amener à l'épaisseur désirée, de quelques dixièmes de millimètre, en particulier de 0,7 mm.

Du fait que la composition pulvérulente selon l'invention comporte une faible quantité de matière plastique et de matière conductrice, le matériau empâté sec qui en résulte peut être laminé sous une pression moindre que celle nécessaire pour laminer les matériaux provenant d'une poudre ayant une composition classique à plus forte teneur en matière plastique et en matière conductrice.

Par exemple, alors qu'on doit mettre en oeuvre des pressions de l'ordre de 2000 $kg/cm^2$ pour laminer une composition antérieure, une pression de l'ordre de 200 à 350 $kg/cm^2$ est suffisante si l'on part de la composition précitée et l'on désire obtenir une capacité faradique volumique de 380 $mAh/cm^3$, qui correspond à une capacité superficielle de 25 $mAh/cm^2$ pour une épaisseur de 0,7 mm.

L'électrode positive obtenue dans cette première phase du procédé selon l'invention a un rendement faradique relativement mauvais, car elle ne comporte pas suffisamment de matière conductrice et elle se délite rapidement en cycle du fait de sa faible teneur en matière plastique.

Sur les figures 1 et 2, la variation de capacité d'une électrode obtenue par la mise en oeuvre uniquement de la première phase du procédé selon l'invention est représentée par la courbe 2 et on voit que sa capacité s'effondre rapidement au bout de quelques cycles charge/décharge.

La demanderesse a constaté avec surprise qu'il est possible de rendre une telle électrode suffisamment conductrice et suffisamment résistante aux phénomènes de cyclage en polarisant cathodiquement cette électrode.

Ainsi, à titre d'exemple, l'électrode obtenue dans la première phase du procédé à partir de la poudre ayant la composition donnée ci-dessus a été polarisée cathodiquement dans une solution aqueuse d'au moins un sel de nickel, la densité du courant étant assez faible pour que toute la masse poreuse de l'électrode soit concernée; une contre-électrode en nickel est également plongée dans la solution aqueuse de sel de nickel.

On a ainsi immergé dans une solution aqueuse de chlorure de nickel à 100 g/l de $Ni^{++}$, additionnée d'un agent mouillant, tel que le composé $C_6F_{13}C_2H_4(C_2H_4O)_n$ OH (avec n voisin de 12), maintenue à une température de 50 %, une électrode positive épaisse de 0,7 mm, obtenue dans la première phase et ayant une porosité de 50 % et une capacité faradique de 25 $mAh/cm^2$.

Au bout de deux heures d'immersion on commence la polarisation cathodique qui est effectuée avec un courant de 4 $mA/cm^2$ pendant 14 heures 30 min.

A la fin de cette période de polarisation, on lave et sèche l'électrode et on lui fait subir un assouplissement mécanique pour lui enlever la rigidité résultant de la structure créée par la polarisation cathodique, structure qui apporte le supplément désiré de conductibilité électrique et de solidité.

Il est avantageux de faire subir à l'électrode positive ainsi obtenue un traitement supplémentaire, connu en lui-même, qui consiste à immerger l'électrode positive dans une solution de sulfate de cobalt, l'introduction d'ions cobalt dans l'électrode améliorant notablement le rendement "en charge" de l'hydroxyde de nickel.

En ce qui concerne la polarisation cathodique dans un sel de nickel, elle peut être effectuée :

- soit de façon statique en immergeant dans le bain de sel de nickel une spirale à trois rubans, à savoir l'électrode positive obtenue dans la première phase du procédé selon l'invention, un séparateur avec des perforations disposées selon un gradient et une contre-électrode en nickel, cette dernière se trouvant à l'extérieur de la spirale;

- soit de façon dynamique en faisant défiler régulièrement un ruban d'électrode positive obtenue dans la première phase du procédé selon l'invention entre deux contre-électrodes en nickel.

En ce qui concerne les caractéristiques de la polarisation anodique, il y a lieu de noter que :

- le sel de nickel peut être du sulfamate, du nitrate, du sulfate, mais est de préférence du chlorure de nickel;

- la concentration en $Ni^{++}$ est comprise entre 50 et 150 g/l (plus la concentration est faible et plus faible doit être le courant de polarisation), de préférence entre 100 et 125 g/l;

- la densité de courant est comprise entre 1 et 20 mA/cm$^2$ frontal, de préférence est voisine de 4 mA/cm$^2$, pendant une durée telle que la quantité de nickel déposée soit de 0,06 à 0,07 g/cm$^2$ frontal, de préférence de l'ordre de 0,065 g/cm$^2$, pour une électrode positive de 25 mAh/cm$^2$;

- l'agent mouillant n'est pas absolument nécessaire si on opère à faible courant et à température supérieure à 45°C;

- la température du bain de chlorure (ou d'un autre sel) de nickel est comprise entre 45 et 75°C, de préférence est de l'ordre de 50°C;

- il est très avantageux de laisser l'électrode la positive s'imprégner du bain de chlorure de nickel ou d'un

8

autre sel de nickel avant de la polariser cathodiquement, le temps de mouillage étant compris entre 30 min. et 3 heures (il est d'autant plus court que la température est plus élevée), de préférence de l'ordre de deux heures, à 50°C.

On obtient finalement par la mise en oeuvre successive des deux phases du procédé selon l'invention une électrode positive à l'hydroxyde de nickel qui présente sensiblement les mêmes propriétés qu'une électrode obtenue par le procédé industriel classique mettant en oeuvre un support poreux en nickel fritté dont les pores sont ensuite remplis de sels de nickel par imprégnation, ces sels étant transformés en hydroxyde de nickel par précipitation dans une solution alcaline, avec répétition des phases d'imprégnation et de précipitation, mais à un prix de revient beaucoup moins élevé.

Sur les figures 1 et 2 on a représenté les variations de capacité en fonction du nombre de cycles charge/décharge pour une électrode industrielle classique du type "positive frittée" (courbe 1) et pour une électrode obtenue par les deux phases du procédé selon l'invention (courbe 3). On s'aperçoit tout de suite que les deux courbes 1 et 3 sont très voisines l'une de l'autre et que par conséquent les deux électrodes sont équivalentes, l'électrode selon l'invention étant beaucoup moins chère du fait qu'elle ne met pas en oeuvre de support poreux en nickel fritté et une succession d'imprégnations et de précipitations. A titre de comparaison, la courbe 2 correspond à une électrode positive obtenue à la fin de la première phase du procédé selon l'invention, c'est-à-dire n'ayant pas subi de polarisation cathodique. La comparaison des courbes 2 et 3 montre l'amélioration résultant de la polarisation cathodique selon la deuxième phase du procédé selon l'invention.

Pour terminer on va donner une description détaillée d'un mode de réalisation préféré du procédé selon l'invention.

1. Préparation d'une solution aqueuse à 1 % de méthylcellulose M C 6000.

2. Mise en suspension, dans cette solution, de la matière plastique en poudre (polyéthylène basse densité, granulométrie comprise entre 10 et 20 microns.

3. Mise en suspension, dans la solution précitée contenant la matière plastique, de la poudre conductrice (nickel carbonyle 255, granulométrie entre 2 et 3 microns).

4. Mise en suspension, dans la solution précitée contenant la matière plastique et la poudre conductrice, de la poudre de $Ni(OH)_2$ (granulométrie moyenne de 40 à 50 microns pour 60 à 70 % du produit) : en effet si la poudre de $Ni(OH)_2$ est trop fine les électrodes sont fragiles, si la poudre est trop grosse on a un mauvais rendement.

5. La pâte ainsi obtenue a les proportions suivantes :
   - poudre sèche = 60 % $\pm$ 2 %
   - solution de méthylcellulose = 40 % $\pm$ 2 %
   proportions dans la poudre sèche (sans méthylcellulose) :
   - $Ni(OH)_2$ = 72 %
   - Ni carbonyle = 24 %
   - matière plastique = 4 %

6. Empâtage à vitesse comprise entre 20 et 100 mètres par heure, à travers une trémie dans laquelle intervient la pression hydrostatique de la pâte, avec un support en fer nickelé perforé ayant une "transparence" supérieure à 35 % et une épaisseur de 0,1 mm.
   La quantité de pâte correspond à une capacité de 23 à 28 mAh/cm$^2$.

7. A la sortie de la trémie d'empâtage, séchage par infrarouge, réglé de telle sorte qu'à la vitesse choisie l'humidité résiduelle donne un produit qui adhère à son support perforé, mais ne colle pas sur la surface des laminoirs.
   Cette humidité résiduelle (d'environ 2 %) est nécessaire pour l'opération suivante.
   Epaisseur à sec = 1 mm environ.

8. Laminage de la bande chaude, avec un laminoir froid, de telle sorte que la porosité finale soit voisine de 50 %, avec une épaisseur laminée de 0,6 à 0,7 mm.

Capacité faradique moyenne 25 mAh/cm$^2$.

9. Assouplissement de la bande.

10. Nickelage de la bande, en continu.

Bain : $NiCl_2$ exclusivement avec 1 % d'agent mouillant.

Teneur en $[Ni^{++}]$ supérieure à 100 g/l, mais inférieure à 280 g/l; de préférence égale à 200 g/l.

La température est supérieure à 40°C, mais inférieure à 80°C; de préférence égale à 50°C.

Anode : nickel S Mode opératoire :

phase de mouillage, sans application de courant, pendant 30 mn à 2 heures, de préférence pendant une heure; puis polarisation cathodique à densité de courant J comprise entre 10 et 300 mA/cm$^2$ pendant une durée telle que la quantité de Ni déposée dans les pores corresponde à 55 à 65 mAh/cm$^2$, de préférence 60 mAh/cm$^2$ (loi de Faraday).

Courant préférentiel : 10 mA/cm$^2$; en effet au-delà de 40 mA/cm$^2$ on a un nickelage par impulsions (temps de non polarisation de l'ordre de quelques minutes).

11. A la fin du nickelage, la bande est lavée à l'eau chaude adoucie à une température d'environ 50°C, puis séchée.

Le poids de nickel déposé est tel qu'il soit le double de celui du Ni carbonyle.

12. La bande nickelée et séchée est assouplie.

13. La bande nickelée, séchée et assouplie, est dopée au cobalt par immersion dans une solution de sulfate de cobalt.

La teneur en $[Co^{++}]$ est de 50 g/l $\pm$ 10 g/l.

La température est de 45°C $\pm$ 10°C.

La durée est de 15 mn $\pm$ 5 mn.

14. A la fin du cobaltage, la bande séchée contient environ 1,5 % de Co dans la matière sans collecteur.

L'invention n'est pas limitée aux modes de réalisation décrits.

11

<u>REVENDICATIONS</u>

1. Procédé pour fabriquer une électrode positive à l'hydroxyde de nickel pour accumulateur alcalin, caractérisé en ce qu'il comporte, en combinaison, deux phases principales successives, à savoir :

- une première phase consistant à déposer sur un support un mélange pâteux constitué par au moins 70 % en poids d'hydroxyde de nickel en poudre, par 20 à 25 % en poids d'une poudre conductrice et par une quantité inférieure à 5 % en poids d'un liant, puis à sécher et à laminer le mélange pâteux sur le support; et

- une deuxième phase consistant à procéder à une polarisation cathodique, dans un électrolyte à base d'au moins un sel de nickel, du support ainsi revêtu, séché et laminé, puis à laver, sécher et assouplir l'électrode ayant subi la polarisation cathodique.

2. Procédé selon la revendication 1, caractérisé en ce que la poudre conductrice est constituée par du nickel carbonyle.

3. Procédé selon la revendication 1 ou 2, caractérisé en ce que le liant est constitué par du polyéthylène microfiné.

4. Procédé selon l'une quelconque des revendications précédentes, caractérisé en ce que la polarisation cathodique est précédée par une phase de mouillage, sans application de courant, dans le même électrolyte que celui de la polarisation cathodique.

5. Procédé selon l'une quelconque des revendications précédentes, caractérisé en ce que la polarisation cathodique est effectuée avec une intensité de courant comprise entre 10 et 300 mA/cm$^2$.

6. Procédé selon l'une quelconque des revendications précédentes, caractérisé en ce que le sel de nickel de l'électrolyte est du chlorure de nickel.

7. Procédé selon l'une quelconque des revendications précédentes, caractérisé en ce que la concentration en Ni$^{++}$

est comprise entre 50 et 150 g/l dans l'électrolyte.

8. Procédé selon l'une quelconque des revendications précédentes, caractérisé en ce que l'électrode positive est plongée dans le bain de sel de nickel constituant l'électrolyte pendant une certaine période de temps avant de commencer l'opération de polarisation cathodique.

9. Procédé selon l'une quelconque des revendications précédentes, caractérisé en ce qu'on fait subir à l'électrode positive, après l'opération de polarisation cathodique, une immersion dans une solution de sel de cobalt, notamment de sulfate de cobalt, immersion connue en elle-même.

10. Electrode positive à l'hydroxyde de nickel pour accumulateur alcalin obtenue par le procédé selon l'une quelconque des revendications précédentes.

11. Accumulateur alcalin comportant au moins une électrode positive selon la revendication 10.

0170573

FIG.1.

FIG.2.

**0170573**

Numero de la demande

**RAPPORT DE RECHERCHE EUROPEENNE**

Office européen
des brevets

EP 85 40 1353

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 317 347 (J.J. COLEMAN et al.)<br>* Figure 3; revendications 2,6,7,10; colonne 1, lignes 9-12, 48-49; exemples 1,2; colonne 3, lignes 42-66 * | 1,6,10,11 | H 01 M 4/32 |
| Y | | 3,5,9 | |
| | --- | | |
| X | CHEMICAL ABSTRACTS, vol. 95, no. 20, février 1981, page 213, no. 172678e, Columbus, Ohio, US; & JP - A - 81 82 573 (SANYO ELECTRIC CO., LTD.) 06-07-1981<br>* Abrégé * | 1,3,10,11 | |
| | --- | | |
| X | PATENTS ABSTRACTS OF JAPAN, vol. 5, no. 141 (E-73)[813], 5 septembre 1981, page 149 E 73; & JP - A - 56 78 072 (SANYO DENKI K.K.) 26-06-1981<br>* Abrégé * | 1,3,6,10,11 | **DOMAINES TECHNIQUES RECHERCHES (Int. Cl.4)**<br><br>H 01 M |
| | --- | | |
| X | FR-A-1 371 054 (SVENSKA ACKUMULATOR AKTIEBOLAGET JUNGNER)<br>* Résumé, points 1,2d; page 2, colonne de gauche, paragraphe 3; page 2, colonne de droite, paragraphe 3 - page 3, colonne de gauche, dernier paragraphe - colonne de droite, paragraphe 1 * | 1,2,10,11 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 09-10-1985 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

Office européen
des brevets

**RAPPORT DE RECHERCHE EUROPEENNE**

**0170573**
Numéro de la demande

EP 85 40 1353

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 028 072 (LUCAS INDUSTRIES) <br> * Revendications 1,5,7; page 5, lignes 16-22; page 8, lignes 1-3 * <br><br> --- | 9 | |
| Y | US-A-3 615 833 (M. JOST) <br> * Colonne 2, lignes 53-69 * <br><br> --- | 3 | |
| Y | GB-A-2 044 801 (TAMIL NADU ALKALINE BATTERIES) <br> * Revendications 1,3 * <br><br> --- | 5 | |
| A | CHEMICAL ABSTRACTS, vol. 84, no. 13, 28 juin 1976, page 132, no. 182439q, Columbus, Ohio, US; & JP - A - 75 145 836 (MATSUSHITA ELECTRIC INDUSTRIAL CO., LTD.) 22-11-1975 <br> * Abrégé * <br><br> --- | 1,2 | DOMAINES TECHNIQUES RECHERCHES (Int. Cl.4) |
| A | US-A-3 796 607 (G.R. SCHAER et al.) <br> * Revendications 1,3,10; colonne 3, lignes 3-6 * <br><br> --- | 5 | |
| A | ELECTROCHEMICAL TECHNOLOGY, vol. 6, no. 1/2, janvier/février 1968, pages 20-25; R.G. BLACK et al.: "Flexible, thin-film nickel-cadmium batteries" <br> * Page 21, tableau I * <br><br> ----- | 7 | |

Le présent rapport de recherche a été établi pour toutes les revendications

| Lieu de la recherche | Date d'achèvement de la recherche | Examinateur |
|---|---|---|
| LA HAYE | 09-10-1985 | D'HONDT J.W. |